# EUROPEAN PATENT SPECIFICATION

(11) **EP 3 745 418 B1**
(45) Date of publication and mention of the grant of the patent: **15.02.2023**
(21) Application number: 18901975.5
(22) Date of filing: 30.07.2018
(51) Int. Cl.: B32B 18/00, C04B 35/51, G21C 21/02, G21C 3/04, C04B 38/06, G21C 3/42, G21C 3/18, G21C 3/62, C04B 35/10

(54) **NUCLEAR FUEL SINTERED BODY HAVING EXCELLENT IMPACT RESISTANCE**
KERNBRENNSTOFFSINTERKÖRPER MIT AUSGEZEICHNETER SCHLAGFESTIGKEIT
CORPS FRITTÉ DE COMBUSTIBLE NUCLÉAIRE AYANT UNE EXCELLENTE RÉSISTANCE AUX CHOCS

(30) Priority: 24.01.2018 KR 20180008763
(43) Date of publication of application: 02.12.2020
(73) Proprietor: Kepco Nuclear Fuel Co., Ltd, Daejeon 34057 (KR)
(72) Inventor: NA, Yeon-soo, Daejeon 34071 (KR); CHOI, Min Young, Daejeon 35220 (KR); LIM, Kwang-young, Seoul 03620 (KR); LEE, Seung-jae, Daejeon 34155 (KR); JUNG, Tae Sik, Sejong-si 30150 (KR); MOK, Yong Kyoon, Daejeon 34071 (KR); YOO, Jong Sung, Daejeon 35245 (KR)
(74) Representative: Peterreins Schley
(86) International application number: PCT/KR2018/008636
(87) International publication number: WO 2019/146857

(56) References cited:
- WO-A1-02/45096
- WO-A1-2007/028870
- WO-A1-2010/037748
- JP-A- 2000 206 282
- KR-A- 20000 019 009
- KR-A- 20100 079 423
- KR-A- 20110 070 984
- US-B2- 9 053 830

## Description

### Technical Field

The present invention relates to a preparation method of a nuclear green pellet and a nuclear fuel pellet, and a nuclear fuel pellet prepared using same and, more particularly, to a preparation method of a nuclear green pellet and a nuclear fuel pellet, and a nuclear fuel pellet having excellent impact resistance prepared using same.

### Background Art

Zircaloy, a base alloy of zirconium, has excellent corrosion resistance to most organic acids, inorganic acids, strong alkalis, and molten salts, so it is used as an excellent material in the chemical industry in, for example, special heat exchanger columns, reaction vessels, pumps, valves, and the like. In addition, Zircaloy is widely used as a material for nuclear fuel cladding and core structures in most reactors currently in operation. This is because zirconium alloy has a small cross-sectional area for absorption of thermal neutrons, relatively high strength and ductility in reactor operating conditions, and high corrosion resistance to coolants.

However, when the Zircaloy cladding tube is damaged by the pellet-clad interaction (PCI) due to the rapid increase in the power output when a reactor is operated, a severe accident may occur in which nuclear fission-generating material flows out into the primary coolant. Therefore, many studies have been conducted from the viewpoint of establishing safety limits or countermeasures to prevent failure to the Zircaloy cladding tube by PCI. Stress corrosion fracture due to the combined action of local stress and iodine that is a fission product is considered the most likely cause of the damage, wherein the local stress is provided on the cladding tube as the pellets, which are nuclear fuel pellets, are destroyed by thermal expansion and nuclear swelling.

Therefore, it is important to study the composition of the cladding material or to perform a heat treatment process to prevent cladding damage, but it is also important to secure the strength of the pellet, which is the nuclear fuel pellet.

Meanwhile, in order to improve the economic efficiency of a nuclear power plant, a high-burnup and long-term operation are considered, and accordingly, the operating environment of the nuclear power plant has become harsher, and high-performance nuclear fuel development has been required.

In particular, after it was recently reported that pellet-clad mechanical interaction (PCMI) failure were caused by a missing pellet surface (MPS) in a pressurized water reactor (PWR), research has been conducted mainly on the improvement of the manufacturing process and the shape of the fuel pellet to reduce MPS.

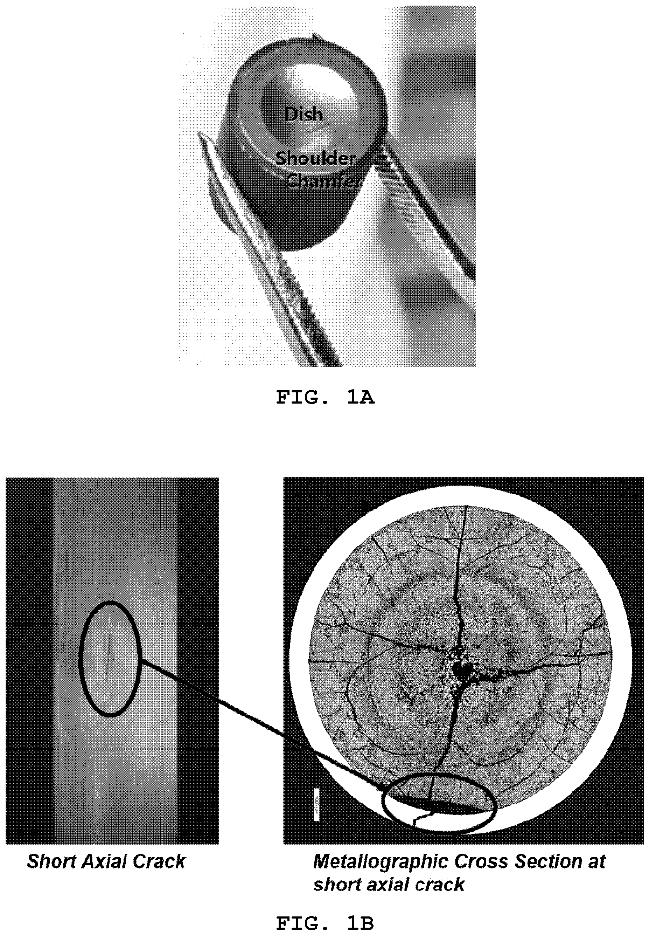

The PCI failure caused by the MPS is a phenomenon in which excessive stress is concentrated on the MPS defect area in an abnormal output state in a fuel rod loaded with a fuel pellet having surface defects such as end chips in the fuel rod, as shown in FIG. 1b, and is mostly generated in the boiling water reactor (BWR) but is low in the frequency of occurrence in the PWR.

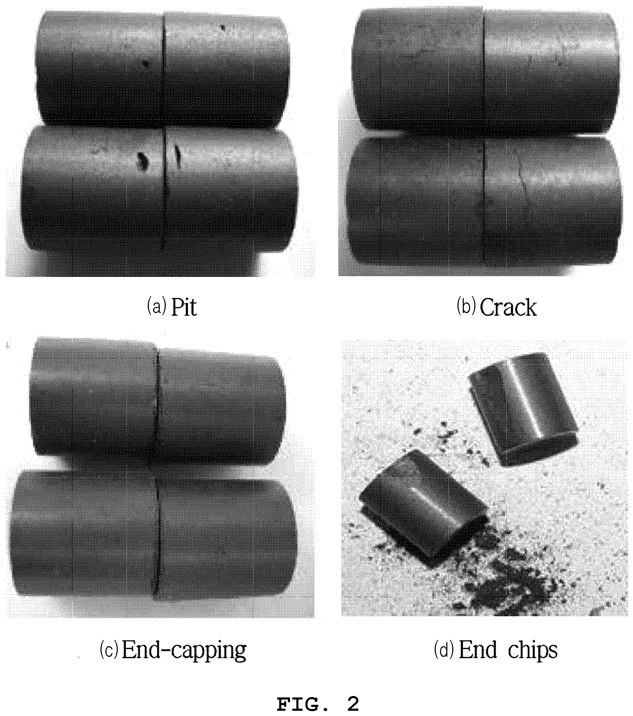

The types of surface defects in the fuel pellet are typical surface defects such as pits, cracks, end capping, and end chips as shown in FIGS. 2a to 2d, and the PCMI failure by the MPS is mostly caused by the end chips defects.

Looking at the research trends of each country to solve such problems, AREVA developed and supplied an MPS-reduced UO₂ fuel pellet in 2004 as commercial nuclear fuel. The MPS-reduced UO₂ fuel pellet is improved in quality by analyzing the causes of defects in the fuel pellet during the compaction process, sintering process, grinding process, and fuel rod preparing process, in which defects may occur. At the same time, by improving the shape of the dish and the chamfer of the nuclear fuel pellet through the finite element method (FEM) and mechanical performance tests, the defect rate of nuclear fuel pellet caused by the MPS is decreased.

Westinghouse of the United States is focusing on process improvement to reduce defective fuel pellets with fuel pellet surface defects and to prevent MPS fuel pellets from being loaded into the cladding tube. As a representative example, the handling process to prevent chipping during preparing of the fuel pellet has been improved, and an automated laser system for the size measurement of the total fuel pellets has been introduced. In addition, MPS evaluation criteria were prepared by parallelly performing an evaluation of FEM, and an automated process for observing surface contamination or defects in the fuel pellet using various optical methods was introduced. In particular, in order to achieve zero defects in nuclear fuel, fuel suppliers, world-leading power generation companies, and industry-academia research centers have been organizing and proceeding with a fuel reliability program (FRP) focusing on EPRI. In order to analyze and improve the PCI damage caused by the MPS, PCI guidelines are being implemented among EPRI's six fuel reliability programs.

No research has been conducted in earnest in relation to the development of MPS-reduced fuel pellets in Korea, and in 2007, government-funded fuel reliability enhancement technology development was conducted, but this is not related to the preparing process for MPS reduction or the development of fuel pellet. This was rather a study related to the analysis of defect factors of the nuclear fuel and database construction.

Currently, the present applicant is the only nuclear fuel manufacturer and supplier in Korea, and performs visual inspection according to the quality assurance manual after the fuel pellet is manufactured to sort the fuel pellet having surface defects for MPS reduction.

However, for strengthening production competitiveness and producing high-quality fuel pellet according to diversified overseas export markets, inspection and screening should be strengthened, and for more fundamental solutions, shape improvement of UO₂ fuel pellets with MPS resistance should be performed first.

Bringing the improved manufacturing process of fuel pellets and the fuel pellet defect inspection automation system, which have technically entered the stabilization stage overseas, into Korea has problems that the powder characteristics of the fuel pellets used abroad and in Korea are different, and that the specification values between countries are different. Considering that re-validation through the In-pile performance test is essential for domestic nuclear power plants, importing foreign technology directly requires going through a domestic optimization process, which may incur additional large costs.

Therefore, it is urgent to improve the shape of the fuel pellet that may solve the potential defect problem rather than introducing an overseas inspection system as it is, in terms of cost or for future commercialization advantages.

### Documents of Related Art

Korean Patent No. KR 10-0982664 (Registered on September 10, 2010)

WO 02/45096 A1 discloses a pencil containing substantially cylindrical oxide nuclear fuel pellets, based on enriched uranium oxide. The H/D ratio between the height and the diameter of the pellet ranges between 0.4 and 0.6. The diametral clearance between the pellets and the sheath does not exceed 200 µm.

WO 2010/037748 A1 discloses a sintered fuel pellet for a water nuclear reactor fuel rod. The sintered fuel pellet comprises a peripheral wall extending along a central axis and two end faces. At least one of the end faces comprises at least a first chamfer extending from the peripheral wall towards the central axis with a non-zero slope with respect to a plane perpendicular to the central axis and a second chamfer extending from the first chamfer towards the central axis with a second non-zero slope with respect to a plane perpendicular to the central axis, wherein the first slope is different from the second slope.

US 2013177121 discloses a sintered fuel pellet with a central dish, an annular plane around the central dish and a chamfer. The document is silent about specific dimensions for the annular plane and the chamfer and teaches a very broad range for the HID ratio.

### Disclosure

### Technical Problem

Accordingly, the present invention is to improve problems of the conventional art, and it is intended to dramatically improve the impact strength of a fuel pellet by improving a shape of the fuel pellet, whereby a nuclear fuel pellet, in which pellet-clad mechanical interaction (PCMI) failure due to a missing pellet surface (MPS) is minimized, can be provided.

### Technical Solution

In order to achieve the above objective, there may be provided a nuclear fuel pellet having excellent impact resistance according to the present invention, the pellet being prepared with UO₂ powder and having a cylindrical shape with a height of 9 to 13 mm and a horizontal cross-section diameter of 8 to 8.5mm, and including: at each of a top surface and a bottom surface thereof, a dish 10 configured as a spherical groove shape having a predetermined curvature and a groove diameter of 4.7 to 5.2 mm on a center; a shoulder 20 configured as an annular plane along a rim of the dish 10; and a chamfer 30 configured as a shape in which a corner is chamfered along a rim of the shoulder 20, wherein a width SW of the shoulder 20 is 0.20 mm to 0.80 mm, and an angle between the chamfer 30 and a horizontal plane is a 14-degree angle to 18-degree angle.

Here, the nuclear fuel pellet may be prepared by using a powder in which at least one of PuO₂ powder, Gd₂O₃ powder, and ThO₂ powder is additionally mixed with UO₂ powder.

In addition, the nuclear fuel pellet may be a green pellet provided by sintering a pore-former and a lubricant which are additionally mixed with UO₂ powder.

In addition, the dish 10 may have a center depth of 0.22 mm to 0.26 mm, and a diameter of 4.70 mm to 4.80 mm.

In particular, the dish 10 may be configured as a double shape, in which a second dish 120 having a predetermined diameter, and a first dish 110 having a diameter smaller than the second dish 120 and being provided at a center of the second dish 120 are provided to form a concentric circular shape.

On the other hand, the chamfer 30 may be divided into a first chamfer 310 provided along the rim of the shoulder 20 while being adjacent to the shoulder 20, and a second chamfer 320 provided in a shape in which a corner, at which the first chamfer 310 and a flank of the fuel pellet meet, is chamfered along a rim of the first chamfer 310.

Here, the width of the shoulder 20 may be 0.20 mm to 0.60 mm.

At this time, an angle between the first chamfer 310 and the horizontal plane may be a 1.5-degree angle to 2.5-degree angle, and an angle between the second chamfer 320 and the horizontal plane may be a 16-degree angle to 18-degree angle.

In addition, the width of the shoulder 20: the width of the first chamfer 310 may be 0.2:1.013 to 0.6:0.613.

### Advantageous Effects

As described above, a nuclear fuel pellet having excellent impact resistance according to the present invention has an effect in which pellet-clad mechanical interaction (PCMI) failure due to a missing pellet surface (MPS) can be minimized by dramatically improving impact strength of the fuel pellet by improving the shape of the fuel pellet.

### Description of Drawings

FIG. 1a is a photograph of a conventional fuel pellet.
FIG. 1b is a photograph showing that damage occurs in a state where the fuel pellet having a surface defect is loaded inside a fuel rod.
FIG. 2 shows photographs showing types of missing pellet surface of nuclear fuel pellet.
FIG. 3 shows conceptual views showing a simulated impact test.
FIGS. 4a and 4b are graphs showing a weight loss when an impact energy is a variable and a chamfer angle is a variable, respectively, in the simulated impact test of FIG. 3.
FIG. 5 is a table showing the graph of FIGS. 4a and 4b.
FIG. 6 is a graph showing the table of FIG. 5 into a relationship between the chamfer angle and the weight loss of nuclear fuel pellet.
FIG. 7 is a graph showing the weight loss of missing pellet surface (MPS) resistance fuel pellet with various impact angles by dropping impact test.
FIG. 8 is a vertical sectional view showing an upper portion of a nuclear fuel pellet in an embodiment of the present invention.
FIG. 9 is a vertical sectional view showing a double dish, which is a modified embodiment of FIG. 8.
FIG. 10 is a vertical sectional view showing a double chamfer, which is a modified embodiment of FIG. 8.

### Best Mode

Specific structures or functional descriptions presented in embodiments of the present invention are exemplified for a purpose of describing the embodiments according to a concept of the present invention, and the embodiments according to the concept of the present invention may be implemented in various forms. In addition, the present invention should not be construed as being limited to the embodiments described herein but should be understood to include all modifications, equivalents, or substitutes included in the scope thereof.

Hereinafter, the present invention will be described in detail with reference to the accompanying drawings.

A nuclear fuel pellet having excellent impact resistance according to the present invention is prepared with UO₂ powder and is a cylindrical fuel pellet with a height of 9 to 13 mm and a horizontal sectional diameter of 8 to 8.5 mm.

Specifically, as shown in FIG. 1a, the nuclear fuel pellet according to the present invention has a top surface and a bottom surface, each of which includes: a dish 10 provided at a center in a spherical groove having a predetermined curvature and a groove diameter of 4.7 to 5.2 mm; a shoulder 20 provided in an annular plane along a rim of the dish 10; and a chamfer 30 provided in a shape in which a corner is chamfered along a rim of the shoulder 20, wherein a width SW of the shoulder 20 is 0.20 mm to 0.80 mm, and an angle between the chamfer 30 and a horizontal surface is a 14-degree angle to 18-degree angle. At this time, when a cylindrical shape of the fuel pellet is vertically arranged, a ratio of a width CW of the chamfer 30 to a height CH of the chamfer 30 is 0.1 to 0.4, wherein the CH is a difference between top end height and bottom end height of the chamfer 30.

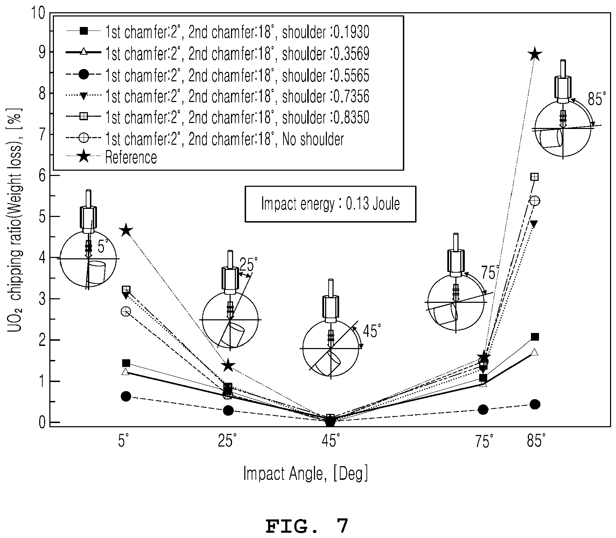

Here, when the angle between the chamfer 30 and the horizontal surface is the 14-degree angle to 18-degree angle, and the width SW of the shoulder 20 is 0.20 mm to 0.80 mm, weight loss of nuclear fuel pellet due to impact energy-becomes minimal. A relationship between the width SW of the shoulder 20 and the mass loss will be described in detail with reference to FIG. 7 and Table 1.

In addition, the nuclear fuel pellet according to the present invention is prepared by using a powder in which at least one of PuO₂ powder, Gd₂O₃ powder, and ThO₂ powder is additionally mixed with UO₂ powder. In addition, the nuclear fuel pellet is prepared by sintering UO₂ green pellet that is in a state mixed with a pore-former and a lubricant into UO₂ powder by molding equipment.

As shown in a photograph of FIG. 1a, there is provided a fuel pellet, the pellet including, at each of a top surface and a bottom surface: a dish 10 provided being recessed on a center; a shoulder 20, being an annular plane and perpendicular to a body of the fuel pellet along the rim of the dish 10; and a chamfer 30 provided into a plane that is a circular shape along the rim of the shoulder 20, wherein the plane is provided by a corner at which the body of the fuel pellet and the shoulder 20 meet along the rim of the shoulder 20, wherein the corner is provided in a predetermined angle due to a chamfering process.

The reason why the dish 10 is provided in a recessed shape is that a space in which thermal expansion may be accommodated is required when thermal expansion occurs in the axial direction in the center of the fuel pellet during reactor operation. Therefore, as the dish 10 is provided, the growth of the fuel rod in the longitudinal direction is limited.

A reason why the shoulder 20 is needed is that it is necessary to provide a surface on which a stacking load between the plenum spring and the fuel pellets is applied when the fuel pellets are stacked inside a nuclear fuel rod. Therefore, in the absence of the shoulder 20, there is a high risk of local damage occurring on the contact surface between the fuel pellets due to the stacking load.

The chamfer 30 serves to reduce a phenomenon that local stress is concentrated on an inner wall of a cladding due to pellet-cladding interaction occurring during the nuclear fuel rod is burned in a reactor and to reduce the missing surface pellet due to the impact generated during preparing the fuel pellets.

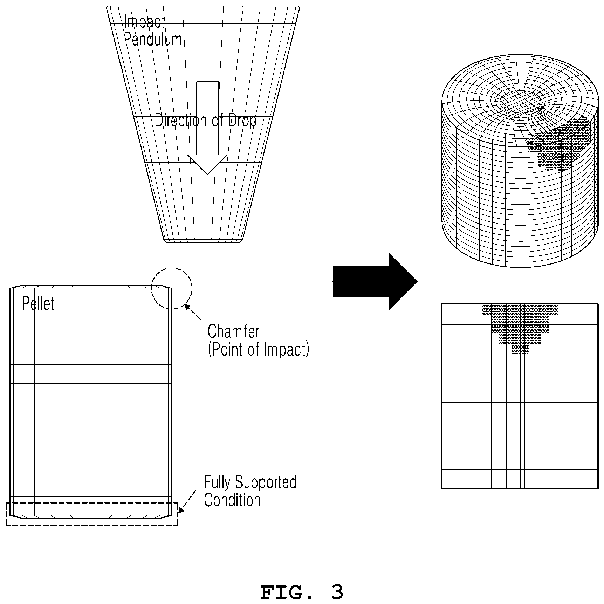

On the other hand, in the present invention, under an assumption that a role of the chamfer 30 is intensively and highly exerted at a specific chamfer 30 angle, a simulation of an impact simulation test of the fuel pellet as shown in FIG. 3 was conducted to attempt preliminary analysis.

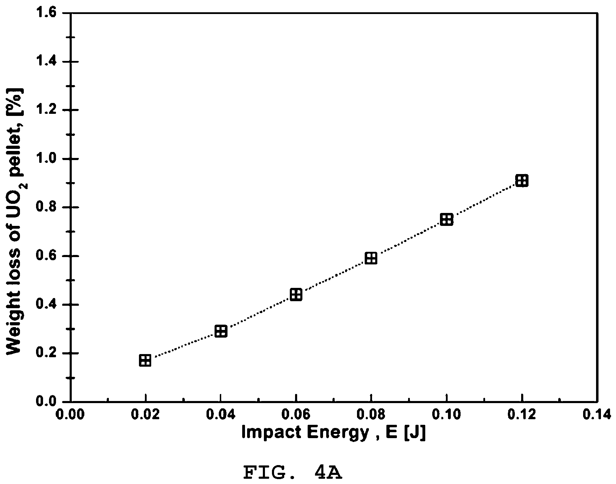

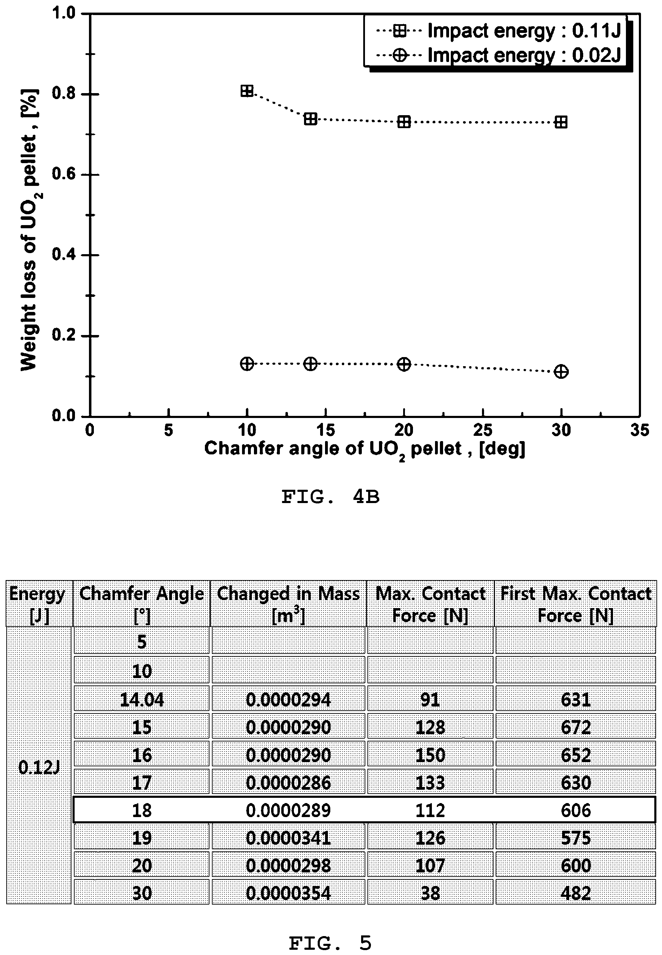

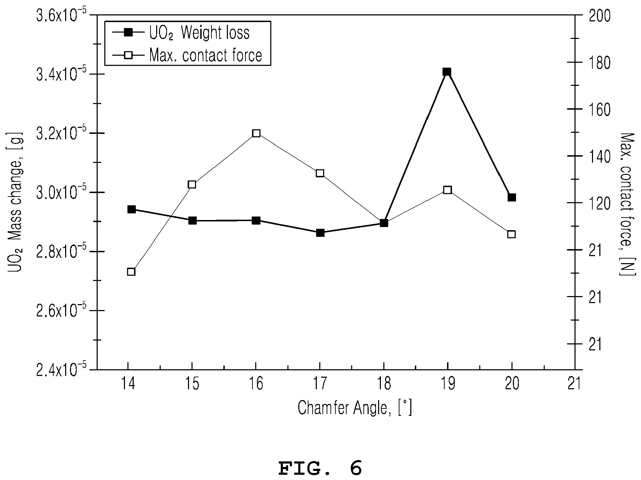

As a result, when the simulation was performed as shown in graphs of FIGS. 4a, 4b, and 6 and a table of FIG. 5,
it was confirmed that, when the impact energy was set as a variable, the larger the impact energy, the greater the amount of weight loss due to breakage of the fuel pellet, and, when the chamfer 30 angle, which is the angle between the chamfer 30 and the horizontal plane in a state where the fuel pellet is vertically erected state, was set as a variable, the amount of weight loss of the fuel pellet due to the impact converged at a specific angle.

In the simulation of FIG. 3, as shown in the graph of FIG. 4b and the table of FIG. 5, when the fuel pellet was impacted, it was confirmed that the weight loss caused by scattering of debris at the corner was the smallest when the chamfer 30 angles are about at least a 14-degree angle in the graph of FIG. 4b and a 14-degree angle to 18-degree angle in the table of FIG. 5, respectively.

In particular, in FIG. 6 graphically showing the table of FIG. 5, it was confirmed that when the chamfer 30 angle was a 16-degree angle to 18-degree angle, the weight loss was the smallest.

In view of this, it was confirmed that the weight losses of the fuel pellet according to a relation of the chamfer 30 angle and the center depth of the dish 10, and of the width of the shoulder 20 and the height of the chamfer 30 were correlated.

Here, in the simulation shown in FIGS. 3 to 6, the shape and size of the dish 10 are given conditions that the center depth DD of the dish 10 is provided in 0.22 mm to 0.26 mm while the diameter DW of the dish 10 is provided in 4.70 mm to 4.95 mm.

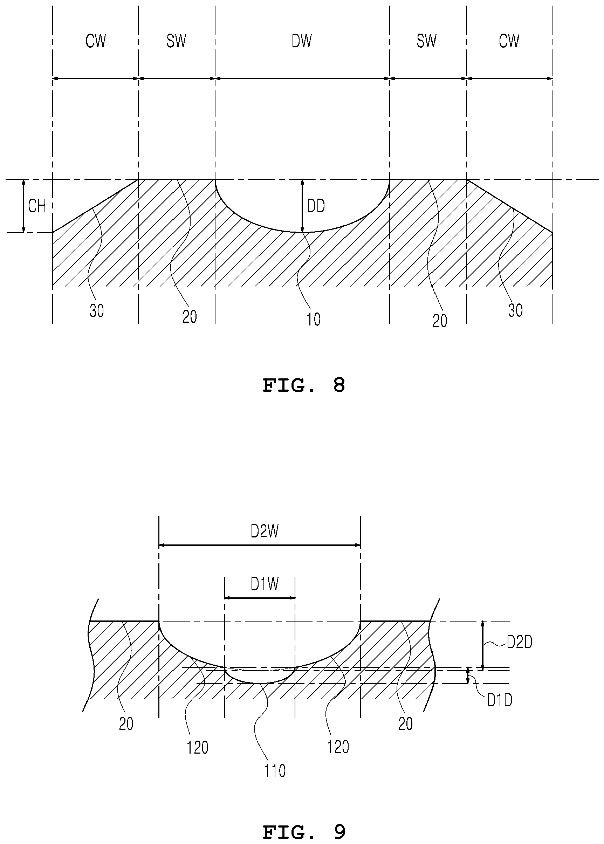

At this time, as illustrated in FIG. 9, a first dish 110 having a predetermined diameter may be formed at the center of the dish 10. In this embodiment, the dish 10 may be referred to a second dish 120.

When the first dish 110 and the second dish 120 are provided as described above, the principle that damage due to the impact of the fuel pellet may be suppressed is as follows.

When the fuel pellet is burned due to the operation of the reactor, fuel pellet damage may occur due to lateral stress caused by the axial growth of the fuel pellet due to combustion heat. Because the growth of the fuel pellet may be further suppressed when the first dish 110 is provided, as shown in FIG. 9, in the central portion of the second dish 120 that has a predetermined diameter and is provided to suppress the axial growth of the fuel pellet, damage to the fuel pellet may be further prevented.

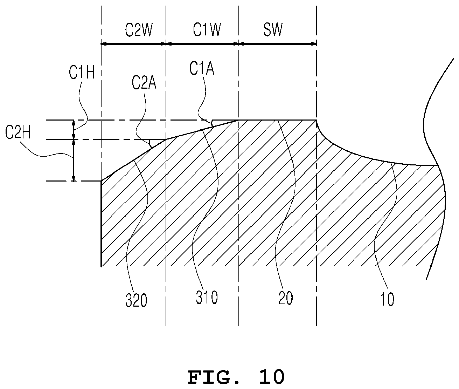

On the other hand, as shown in FIG. 10, the chamfer 30 may be configured to include: a first chamfer 310 provided along the rim of the shoulder 20 while being adjacent to the shoulder 20; and a second chamfer 320 provided by a corner, at which the first chamfer 310 and a flank of the fuel pellet meet, the corner chamfered along the rim of the first chamfer 310.

That is, the chamfer 30 is divided into two chamfers 310 and 320 having different angles from one another.

At this time, in the case that the fuel pellet in the cylindrical shape is vertically disposed, and when an angle C1A of the first chamfer, which is the angle between the first chamfer 310 and a horizontal plane, is a 1.5-degree angle to 2.5-degree angle, and an angle C2A of the second chamfer, which is the angle between the second chamfer 320 and the horizontal plane, is a 16-degree angle to 18-degree angle, the weight loss is the smallest as shown in the graph of FIG. 6 and, therefore, the impact resistance is the strongest, as is confirmed.

In addition, in this case, the shoulder 20 width may be 0.20 mm to 0.60 mm.

By synthesizing the graph of FIG. 7 and the data in Table 1 below, it may be confirmed that a certain combination of the variables minimizes the weight loss of the fuel pellet in the case that the chamfer is separated into the first chamfer 310 and the second chamfer 320, and the weight loss is minimized when the shoulder 20 width is 0.20 mm to 0.60.

**[Table 1]**

| | First chamfer width(mm) | Shoulder width (mm) | UO₂ weight loss rate after impact test (%) | | | | |
|---|---|---|---|---|---|---|---|
| | | | Impact angle | | | | |
| | | | 5° | 25° | 45° | 75° | 85° |
| Specimen 1 | 1.02 | 0.1930 | 1.5 | 0.83 | 0.04 | 1.06 | 2.04 |
| Specimen 2 | 0.8561 | 0.3569 | 1.23 | 0.71 | 0.04 | 0.95 | 1.73 |
| Specimen 3 | 0.6565 | 0.5565 | 0.62 | 0.35 | 0.03 | 0.35 | 0.42 |
| Specimen 4 | 0.4774 | 0.7356 | 3.09 | 0.91 | 0.04 | 1.37 | 4.81 |
| Specimen 5 | 0.378 | 0.8350 | 3.21 | 0.88 | 0.085 | 1.48 | 6.02 |
| Specimen 6 | 1.213 | 0.00 | 2.68 | 0.76 | 0.06 | 1.48 | 5.41 |
| Reference specimen (Conventional fuel pellet) | (Single chamfer) | | 4.67 | 1.43 | 0.67 | 1.59 | 8.93 |

The specimens 1 to 6 are double chamfers divided into a first chamfer 310 and a second chamfer 320.

The angle between the second chamfers of the specimens 1 to 6 and the horizontal plane is the 18-degree angle, and the angle between the first chamfers and the horizontal plane is a 2-degree angle.

The reference specimen has a single chamfer, and the angle between the single chamfer of the reference specimen and the horizontal plane is a 14-degree angle.

The specimen height of the specimens 1 to 6 is 9.8 mm, the horizontal cross-section diameter is 8.192 mm, the dish diameter is 4.75 mm, and the second chamfer width is 0.408 mm.

The specimen 6 does not have the shoulder 20, the dish 10 is provided in a concentric double shape, with reference to FIG. 9, the diameter D1W of the first dish 110 provided at the center is 1.9474mm, a depth D1D of the first dish is 0.2 mm, the diameter D2W of the second dish 120 surrounding the first dish 110 is 4.75 mm, and the depth D2D of the second dish is 0.3 mm.

Table 1 and the graphs of FIG. 7 above show the weight loss caused by the breakage due to an impact by dropping the fuel pellet at various angles.

The specimens notated on the upper left of the graph in FIG. 7 are all 7 in the order from top to bottom, and this order corresponds to the specimen order in Table 1. The lowermost specimen of Table 1 and the lowermost reference specimen (hereinafter referred to as a 'reference specimen') of the specimens on the upper left of the graph of FIG. 7 are each a conventional nuclear fuel pellet.

The first thing that may be noticed is that the weight loss at a 45-degree angle is similarly good for all specimens, but the deviation is greater as it deviates from the 45-degree angle and becomes severe at a 5-degree angle and 85-degree angle. At this time, in the reference specimen, the angle between the single chamfer and the horizontal surface is the 14-degree angle, whereas in the specimens 1 to 6, the angle between the second chamfer and the horizontal surface is the 18-degree angle. As previously mentioned, it may be seen that the weight loss is much smaller in the impact test of the 5-degree angle and 85-degree angle in the case where the chamfer angle is the 18-degree angle than in the case where the chamfer angle is the 14-degree angle of the reference specimen.

In addition, with reference to FIG. 7 and Table 1 above, it may be seen that in the range of the shoulder width of 0.2 mm to 0.8 mm, the weight loss is significantly less than that of the reference specimen.

Since the impact angle generated on the specimen varies depending on the situation where the impact occurs, the weight loss due to impact should be minimized at all angles, considering the impact angle is almost random. Therefore, even at the 5-degree angle and 85-degree angle, the weight loss needs to be significantly reduced compared to the conventional art.

In particular, even at the impact angles of the 5-degree angle and 85-degree angle, the weight loss is extremely small in the specimen 3, and then the weight loss gradually increases in the order of the specimen 2 and the specimen 1. Therefore, it may be seen that specimens 3 to 1 having a particularly small weight loss correspond to cases where the shoulder width is 0.2 mm to 0.6 mm, that is, the shape with the lowest weight loss.

In addition, with reference to Table 1, when the shoulder width is 0.2 mm to 0.6 mm, the most preferable width ratio range of the shoulder 20 width: the first chamfer 310 width is 0.2:1.013 to 0.6:0.613.

Therefore, the shoulder width at which the weight loss is minimized at almost every angle is 0.2 mm to 0.6 mm, and in this case, the most preferred first chamfer 310 width size is 1.013 mm to 0.613 mm.

The present invention described above is not limited by the above-described embodiments and accompanying drawings. It will be obvious to those who have the ordinary knowledge in the art that various substitutions, modifications, and changes are possible within the scope of the present invention.

### <Description of the Reference Numerals in the Drawings>

| | |
|---|---|
| C1A: Angle of first chamfer | C2A: Angle of second chamfer |
| CH: Height of chamfer | C1H: Height of first chamfer |
| C2H: Height of second chamfer | CW: Width of chamfer |
| C1W: Width of first chamfer | C2W: Width of second chamfer |
| DD: Center depth of dish | D2D: Depth of second dish |
| D1D: Depth of first dish | DW: Diameter of dish |
| D2W: Diameter of second dish | D1W: Diameter of first dish |
| SW: Width of shoulder | 10: Dish |
| 20: Shoulder | 30: Chamfer |
| 110: First dish | 120: Second dish |
| 310: First chamfer | 320: Second chamfer |

## Claims

1. A nuclear fuel pellet, the pellet being prepared with UO₂ powder and having a cylindrical shape with a height of 9 to 13 mm and a horizontal cross-section diameter of 8 to 8.5mm, and comprising: at each of a top surface and a bottom surface thereof, a dish (10) configured as a spherical groove shape having a predetermined curvature and a groove diameter of 4.7 to 5.2 mm on a center; a shoulder (20) configured as an annular plane and perpendicular to a body of the fuel pellet along a rim of the dish (10); and a chamfer (30) configured as a shape in which a corner is chamfered along a rim of the shoulder (20), wherein
a width (SW) of the shoulder (20) is 0.20 mm to 0.80 mm, and
an angle between the chamfer (30) and a horizontal plane is a 14-degree angle to 18-degree angle.

2. The pellet of claim 1, wherein the nuclear fuel pellet is prepared by using a powder in which at least one of PuO₂ powder, Gd₂O₃ powder, and ThO₂ powder is additionally mixed with UO₂ powder.

3. The pellet of claim 2, wherein the nuclear fuel pellet is a green pellet provided by sintering a pore former and a lubricant which are additionally mixed with UO₂ powder.

4. The pellet of claim 1, wherein the dish (10) has a center depth of 0.22 mm to 0.26 mm, and a diameter of 4.70 mm to 4.80 mm.

5. The pellet of claim 4, wherein the dish (10) is configured as a double shape, in which a second dish (120) having a predetermined diameter, and a first dish (110) having a diameter smaller than the second dish (120) and being provided at a center of the second dish (120) are provided to form a concentric circular shape.

6. The pellet of claim 1, wherein the chamfer (30) is divided into a first chamfer (310) provided along the rim of the shoulder (20) while being adjacent to the shoulder (20), and a second chamfer (320) provided in a shape in which a corner, at which the first chamfer (310) and a flank of the fuel pellet meet, is chamfered along a rim of the first chamfer (310) .

7. The pellet of claim 6, wherein the width of the shoulder (20) is 0.20 mm to 0.60 mm.

8. The pellet of claim 7, wherein an angle between the first chamfer (310) and the horizontal plane is a 1.5-degree angle to 2.5-degree angle, and an angle between the second chamfer (320) and the horizontal plane is a 16-degree angle to 18-degree angle.

9. The pellet of claim 7, wherein the width of the shoulder (20): the width of the first chamfer (310) is 0.2:1.013 to 0.6:0.613.

## Patentansprüche

1. Kernbrennstoffpellet, wobei das Pellet mit UO2-Pulver hergestellt ist und eine zylindrische Gestalt mit einer Höhe von 9 bis 13 mm und einen horizontalen Querschnittsdurchmesser von 8 bis 8,5 mm aufweist und Folgendes umfasst: eine Mulde (10) an jeder oberen Oberfläche und unteren Oberfläche davon, die als eine sphärische Hohlkehlgestalt mit einer vorbestimmten Krümmung und einem Hohlkehldurchmesser von 4,7 bis 5,2 mm in einer Mitte eingerichtet ist; eine Schulter (20), die als eine ringförmige Ebene und senkrecht zu einem Körper des Brennstoffpellets entlang eines Rands der Mulde (10) eingerichtet ist; und eine Anfasung (30), die als eine Gestalt eingerichtet ist, bei der eine Ecke entlang eines Rands der Schulter (20) angefast ist, wobei
eine Breite (SW) der Schulter (20) 0,20 mm bis 0,80 mm ist und
ein Winkel zwischen der Anfasung (30) und einer Horizontalebene ein 14-Grad-Winkel bis 18-Grad-Winkel ist.

2. Pellet nach Anspruch 1, wobei das Kernbrennstoffpellet unter Verwendung eines Pulvers hergestellt wird, bei dem zusätzlich mindestens ein Pulver von PuO2-Pulver, Gd2O3-Pulver und ThO2-Pulver mit UO2-Pulver vermischt wird.

3. Pellet nach Anspruch 2, wobei das Kernbrennstoffpellet ein Grünpellet ist, das durch Sintern eines Porenbildners und eines Gleitmittels bereitgestellt wird, die zusätzlich mit UO2-Pulver vermischt werden.

4. Pellet nach Anspruch 1, wobei die Mulde (10) eine Mittentiefe von 0,22 mm bis 0,26 mm und einen Durchmesser von 4,70 mm bis 4,80 mm aufweist.

5. Pellet nach Anspruch 4, wobei die Mulde (10) als eine Doppelgestalt eingerichtet ist, bei der eine zweite Mulde (120), die einen vorbestimmten Durchmesser aufweist, und eine erste Mulde (110), die einen kleineren Durchmesser als die zweite Mulde (120) aufweist und die in einer Mitte der zweiten Mulde (120) bereitgestellt ist, bereitgestellt sind, um eine konzentrische kreisförmige Gestalt auszubilden.

6. Pellet nach Anspruch 1, wobei die Anfasung (30) in eine erste Anfasung (310), die entlang des Rands der Schulter (20) bereitgestellt ist während sie an die Schulter (20) angrenzt, und in eine zweite Anfasung (320), die in einer Gestalt bereitgestellt ist, bei der eine Ecke, an der sich die erste Anfasung (310) und eine Flanke des Brennstoffpellets treffen, entlang eines Rands der ersten Anfasung (310) angefast ist, aufgeteilt ist.

7. Pellet nach Anspruch 6, wobei die Breite der Schulter (20) 0,20 mm bis 0,60 mm ist.

8. Pellet nach Anspruch 7, wobei ein Winkel zwischen der ersten Anfasung (310) und der Horizontalebene ein 1,5-Grad-Winkel bis 2,5-Grad-Winkel ist und ein Winkel zwischen der zweiten Anfasung (320) und der Horizontalebene ein 16-Grad-Winkel bis 18-Grad-Winkel ist.

9. Pellet nach Anspruch 7, wobei die Breite der Schulter (20) : der Breite der ersten Anfasung (310) 0,2 : 1,013 bis 0,6 : 0,613 ist.

## Revendications

1. Pastille de combustible nucléaire, la pastille étant préparée avec de la poudre d'UO2 et ayant une forme cylindrique avec une hauteur de 9 à 13 mm et un diamètre horizontal de section transversale de 8 à 8,5 mm, et comprenant : à chacune d'une surface supérieure et d'une surface inférieure de celle-ci, une cuvette (10) configuré sous une forme d'une rainure sphérique ayant une courbure prédéterminée et un diamètre de rainure de 4,7 à 5,2 mm sur un centre ; un épaulement (20) configuré sous la forme d'un plan annulaire et perpendiculaire à un corps de la pastille de combustible le long d'un pourtour de la cuvette (10) ; et un chanfrein (30) configuré sous une forme dans laquelle un coin est chanfreiné le long d'un pourtour de l'épaulement (20), dans laquelle
une largeur (SW) de l'épaulement (20) est de 0,20 mm à 0,80 mm, et
un angle entre le chanfrein (30) et un plan horizontal est un angle de 14 degrés à un angle de 18 degrés.

2. Pastille selon la revendication 1, dans laquelle la pastille de combustible nucléaire est préparée en utilisant une poudre dans laquelle au moins une de la poudre de PuO2, de la poudre de Gd2O3, et de la poudre de ThO2 est en outre mélangée avec de la poudre d'UO2.

3. Pastille selon la revendication 2, dans laquelle la pastille de combustible nucléaire est une pastille verte fournie en frittant un porogène et un lubrifiant qui sont en outre mélangés avec de la poudre d'UO2.

4. Pastille selon la revendication 1, dans laquelle la cuvette (10) a une profondeur centrale de 0,22 mm à 0,26 mm, et un diamètre de 4,70 mm à 4,80 mm.

5. Pastille selon la revendication 4, dans laquelle la cuvette (10) est configurée sous une forme double, dans laquelle une seconde cuvette (120) ayant un diamètre prédéterminé, et une première cuvette (110) ayant un diamètre inférieur à celui de la seconde cuvette (120) et étant prévue à un centre de la seconde cuvette (120), sont prévues pour créer une forme circulaire concentrique.

6. Pastille selon la revendication 1, dans laquelle le chanfrein (30) est divisé en un premier chanfrein (310) prévu le long du pourtour de l'épaulement (20) tout en étant adjacent à l'épaulement (20), et un second chanfrein (320) prévu en une forme dans laquelle un coin, auquel le premier chanfrein (310) et un flanc de la pastille de combustible se rencontrent, est chanfreiné le long d'un pourtour du premier chanfrein (310).

7. Pastille selon la revendication 6, dans laquelle la largeur de l'épaulement (20) est de 0,20 mm à 0,60 mm.

8. Pastille selon la revendication 7, dans laquelle un angle entre le premier chanfrein (310) et le plan horizontal est un angle de 1,5 degré à un angle de 2,5 degré, et un angle entre le second chanfrein (320) et le plan horizontal est un angle de 16 degrés à un angle de 18 degrés.

9. Pastille selon la revendication 7, dans laquelle la largeur de l'épaulement (20) : la largeur du premier chanfrein (310) est de 0,2 : 1,013 à 0,6 : 0,613.
